# EUROPEAN PATENT APPLICATION

(11) **EP 2 492 732 A2**
(43) Date of publication of application: **29.08.2012**
(21) Application number: 12154888.7
(22) Date of filing: 10.02.2012
(51) Int. Cl.: G02B 7/00, G02B 7/02, G03B 17/14

(54) **Mounting structure of infrared camera and infrared camera provided with the same**

(30) Priority: 22.02.2011 JP 2011036361
(71) Applicant: Tamron Co., Ltd., Saitama-shi Saitama 337-8556 (JP)
(72) Inventor: Hashimoto, Yusuke, Saitama 337-8556 (JP)
(74) Representative: Henkel, Breuer & Partner

(57) **Abstract**

An object of the present invention is to provide a mounting structure of infrared camera which enables effective transfer of heat generated in an image sensor to a lens unit without increasing the size of the infrared camera. In order to achieve the object, a mounting structure of infrared camera comprising a lens-side mount disposed in a lens unit in which an imaging lenses are disposed ; and a camera main body-side mount disposed in a camera main body and geared with the lens-side mount in an attachable and detachable manner, wherein the geared portion between the lens-side mount and the camera main body-side mount has a contact area effective for heat transfer of 36% or more of the total surface area is adopted.

## Description

### BACKGROUND OF THE INVENTION

### Field of the Invention

The present invention relates to a mounting structure of infrared camera and an infrared camera provided with the same.

### Background Art

In recent years, as a security measure, an imaging device has been used to monitor suspicious objects such as human beings. Then, an infrared camera which can monitor a human being by a temperature distribution in a monitoring space has been used because it is difficult to detect a human being by a visible light camera in a dimly lit space at night. By the way, increased attention to security and increased awareness of safety in driving a car at night in recent years, requirement on the imaging quality for the infrared camera tends to increase year by year. Conventionally, the security camera for stationary monitoring and the infrared camera for night vision in vehicles can only determine the presence or absence of a human being or an animal, and even a wide-angle image can be provided but a high resolution image cannot be provided.

Here, in order to maintain measurement accuracy for detecting a heat generating body existing in a monitoring space, the infrared camera is required to minimize the deterioration of imaging quality due to the temperature elevation caused by heat generation in the electrical and electronic device disposed. For example, in the conventional lens barrel of an imaging lens mounted on an imaging device such as a digital camera, a solid-state image sensor (CCD, etc.) and a CPU are disposed in the structure. As symbolized by the solid-state image sensor (CCD, etc.) and the CPU, the electrical and electronic device disposed in the imaging device tends to increase performance year by year and the heat generation is also increased. Thus, the infrared camera described above is required to take a measure against heat so as to reduce the temperature difference among spatial portion of the solid-state image sensor, a temperature compensation shutter, and an infrared transmitting lens.

Here, in the visible light camera, a camera head in which a heat radiating member having a higher thermal conductivity than the thermal conductivity of the lens barrel is disposed backward in the direction of the optical axis than the lens barrel in which the image sensor and the imaging optical system are disposed; and the heat generated in the CPU and the like in the lens barrel is transferred to a heat radiating member through a mount section to be spreaded to outside the camera is disclosed (see Japanese Patent Laid-Open No. 2006-121646). In practice, the camera head disclosed in Japanese Patent Laid-Open No. 2006-121646 is a camera head which is provided with an image-taking optical system and an imaging element, is detachably fitted to and transmits image signals to a camera body which receives and processes the image signals, the camera head comprising: a lens barrel which holds inside both the image-taking optical system and the imaging element and is provided with a rotatable control ring on the outer circumference thereof, and the lens barrel is provided with a heat radiating member which has a higher thermal conductivity than the thermal conductivity of the lens barrel and radiates heat from heat sources in the lens barrel, in a position farther backward in the direction of the optical axis than the control ring.

However, the camera head disclosed in Japanese Patent Laid-Open 2006-121646 requires independent heat radiating member and it will make the size of the camera increase. Further, in the camera head disclosed in Japanese Patent Laid-Open 2006-121646, the heat transfer efficiency of the heat generated in the CPU and the like disposed in the lens barrel and transferred to the heat radiating member through the mount portion is not specifically described. That is, Japanese Patent Laid-Open 2006-121646 just describes that the heat radiating member is geared to a contacting member with a relatively large contact surface. Thus, even when the camera head disclosed in Japanese Patent Laid-Open 2006-121646 is applied to an infrared camera, it is difficult to obtain a high resolution photographed image.

The infrared camera can accurately perform object recognition in the dark by detecting and photograph infrared rays radiated from a heat source such as a human being. As the infrared camera perform object recognition by making a heat radiated from an object a photographed image, but when a temperature distribution exists in the infrared camera, it is difficult to obtain a high resolution image. Hence, it is important for improving the imaging quality in the infrared camera having the temperature compensation shutter for temperature compensation arranged close to the image sensor how reduce the temperature difference between a temperature of the spatial portion where the image sensor is disposed in the camera main body-side and the spatial portion where the infrared ray transmitting lens is disposed.

The present invention has been achieved in view of such conventional problems, and an object of the present invention is to provide a mounting structure of infrared camera which enables effective transfer of heat generated in an image sensor to a lens unit without increasing the size of the infrared camera.

### BRIEF DESCRIPTION OF THE DRAWINGS

FIG. 1A is a schematic perspective view illustrating a mounting structure of infrared camera according to one embodiment of the present invention; and FIG. 1B is a schematic cross-sectional view illustrating a mounting structure of infrared camera according to the embodiment of the present invention;
FIG. 2 is a diagram exemplifying a lens-side mount when a bayonet type mount is adopted in the mounting structure of infrared camera according to the present invention;
FIG. 3 is a diagram illustrating a camera main body-side mount when a bayonet type mount is adopted in the mounting structure of infrared camera according to the present invention;
FIG. 4 is an enlarged view of an essential part illustrating a geared state between the lens-side mount and the camera main body-side mount when a bayonet type mount is adopted in the mounting structure of infrared camera according to the present invention;
FIG. 5 is a diagram illustrating a shape and an arrangement of a metal plate spring used in the mounting structure of infrared camera according to the present invention; and
FIG. 6 is a diagram illustrating how calculate a spring reaction force of the metal plate spring used in the mounting structure of infrared camera according to the present invention.

### SUMMARY OF THE INVENTION

As a result of intensive studies, the present inventors have adopted the following mounting structure of infrared camera to achieve the objects described above.

The mounting structure of infrared camera according to the present invention: the mounting structure of infrared camera according to the present invention comprises a lens-side mount disposed in a lens unit in which an imaging lenses are disposed; and a camera main body-side mount disposed in a camera main body and geared with the lens-side mount in an attachable and detachable manner is characterized in that the geared portion between the lens-side mount and the camera main body-side mount has a contact area effective for heat transfer of 36% or more of the total surface area of the geared portion of the mounts.

Further, the mounting structure of infrared camera according to the present invention, it is preferable that any one of the lens-side mount and the camera main body-side mount comprises an elastic member which presses the other mount in the coupling direction in the state where the lens-side mount is geared to the camera main body-side mount.

Further, in the mounting structure of infrared camera according to the present invention, it is preferable that the elastic member is a metal plate spring and a spring reaction force of the metal plate spring is in the range from 4.9 N to 11.5 N.

Further, in the mounting structure of infrared camera according to the present invention, it is preferable that a stress loaded on the metal plate spring in the process where the lens-side mount is being geared to the camera main body-side mount is 80% or less of a yield stress of the metal plate spring.

Further, in the mounting structure of infrared camera according to the present invention, it is preferable that the lens-side mount and the camera main body-side mount are made of an aluminum alloy or a Corson alloy.

The infrared camera according to the present invention: the infrared camera according to the present invention is characterized in provided with the mounting structure of infrared camera described above.

The infrared camera according to the present invention is an infrared camera provided with a mounting structure of infrared camera comprising a lens-side mount disposed in a lens unit in which an imaging lenses are disposed and a camera main body-side mount disposed in a camera main body and geared with the lens-side mount in an attachable and detachable manner, characterized in that a temperature difference between the lens-side mount and the camera main body-side mount is five degrees Celsius or less.

The mounting structure of infrared camera according to the present invention can efficiently transfer heat generated in an image sensor to a lens unit side without increasing the size of the infrared camera. So, the mounting structure of infrared camera according to the present invention and the infrared camera provided with the same can be suitably used in a night vision image sensor and the like required to provide a higher resolution image.

### DETAILED DESCRIPTION OF THE PREFERRED EMBODIMENTS

Now, one embodiment of the present invention will be described with reference to the drawings.

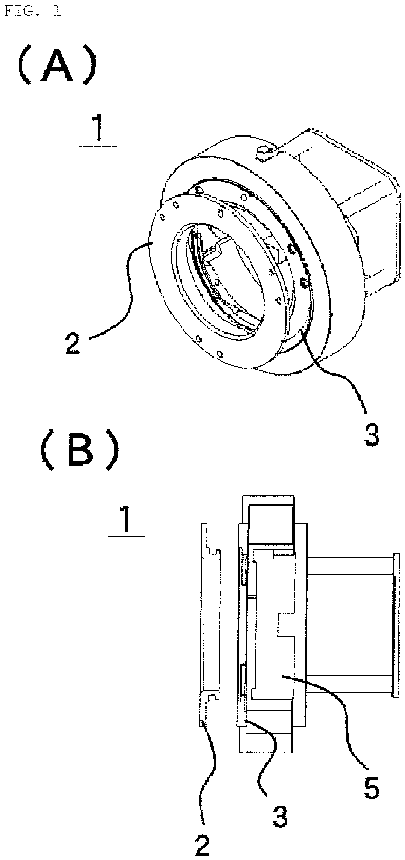

The mounting structure of infrared camera according to the present invention: FIG. 1A is a schematic perspective view illustrating a mounting structure of infrared camera according to one embodiment of the present invention. FIG. 1B is a schematic cross-sectional view illustrating the mounting structure of infrared camera according to the embodiment of the present invention. As illustrated in FIGS. 1A and 1B, a mounting structure of infrared camera 1 according to the present invention comprises a lens-side mount 2 disposed in a lens unit in which an imaging lenses are disposed; and a camera main body-side mount 3 disposed in a camera main body and able to be geared with the lens-side mount in an attachable and detachable manner. In a state in which these mounts 2 and 3 are geared with each other, both mounts 2 and 3 are made contact to enable heat transfer each other. The mounting structure of infrared camera according to the present invention is characterized in that a contact area effective for heat transfer of the geared portion between the lens-side mount and the camera main body-side mount is 36% or more of the total surface area of the geared portion.

More specifically, the mounting structure of infrared camera 1 according to the present invention ensures the increased contact area effective for heat transfer between the mounts 2 and 3 in order to reduce the temperature difference between temperatures in a spatial portion 5 in which the image sensor is disposed in the camera main body-side and a spatial portion in which the infrared transmitting lens is disposed. Because the mounting structure of infrared camera 1 according to the present invention should be provided in an infrared camera which can detect infrared radiation in a mid-infrared range and a far-infrared range, any temperature distribution exists in the infrared camera may affect on image quality. Next, the reason why a contact area effective for heat transfer of the geared portion between the lens-side mount and the camera main body-side mount is 36% or more of the total surface area of the geared portion in the mounting structure of infrared camera 1 according to the present invention will be described below.

FIG. 1B is a cross-sectional view of illustrating the mounting structure of infrared camera according to the embodiment of the present invention. As illustrated in FIG. 1B, an interchangeable-lens camera is also adopted in the infrared camera (not shown) in such a manner that the lens barrel is made gear to the camera main body via a mount mechanism sandwiched therebetween as the visible light camera. In addition, the same method as that of the visible light camera can be applied to the interchangeable-lens infrared camera for the lens-side mount with the camera main body-side mount. With regard to the major types gearing a lens-side mount to a camera main body-side mount, "a screw type mount in which the geared portion between the camera main body-side mount and the lens-side mount is screwed, and the lens-side mount is screwed into the camera main body-side mount", "a bayonet type mount in which 3 to 4 hook portions are disposed in the gearing portion between the camera main body-side mount and the lens-side mount, and each lens-side mount hook is attached into a vacant portion of the camera main body-side mount and then twist " and "a spigot type mount in which the camera main body-side mount is fixed to the lens-side mount by a tightening mechanism such as a ring without rotating the lens-side mount" can be adopted. Although these types are all different in structure as described above, any type of mount can improve the resolution of the infrared camera as long as the contact area effective for heat transfer of the lens-side mount 2 and the camera main body-side mount 3 satisfies the conditions specified in the present invention.

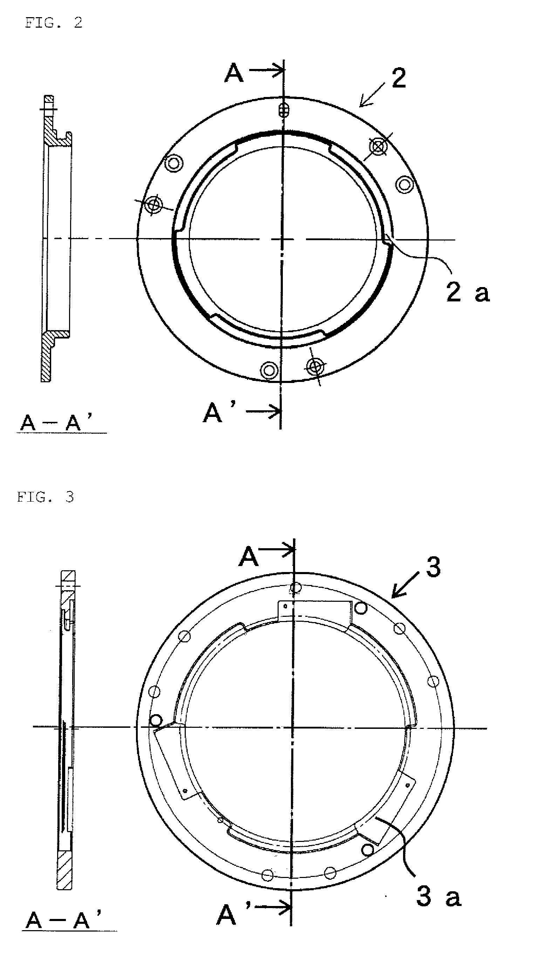

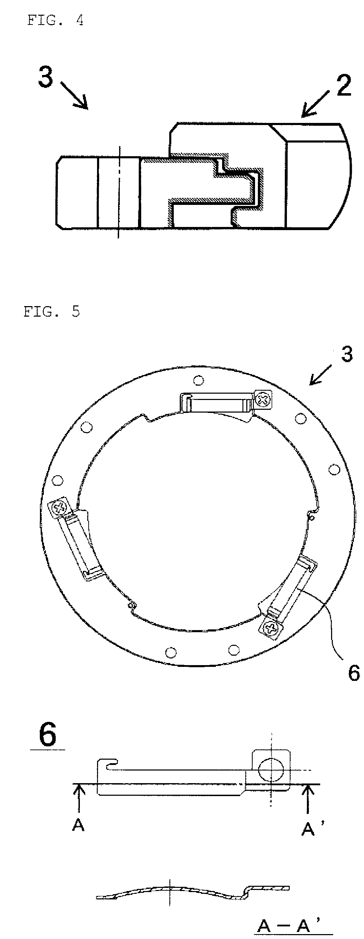

FIG. 2 is a diagram exemplifying a lens-side mount when a bayonet type mount is adopted in the mounting structure of infrared camera according to the present invention. FIG. 3 is a diagram illustrating a camera main body-side mount when a bayonet type mount is adopted in the mounting structure of infrared camera according to the present invention. FIG. 4 is an enlarged view of an essential part illustrating a geared state between the lens-side mount and the camera main body-side mount when a bayonet type mount is adopted in the mounting structure of infrared camera according to the present invention. Here, as illustrated in FIG. 2, three bayonet hooks 2a are arranged at substantially equal intervals along the outer periphery of the lens-side mount 2 each facing outside. Further, as illustrated in FIG. 3, the bayonet grooves 3a are arranged along an inner periphery of the camera-side mount 3 for gearing with the bayonet hooks 2a of the lens-side mount 2. Furthermore, as illustrated in FIG. 3 4, the shaded portion in the diagram corresponds to the contact area effective for heat transfer of the geared portion between the lens-side mount 2 and the camera main body-side mount 3.

Table 1 described below shows the ratio (%) of the contact area effective for heat transfer (mm²) of the total surface (geared area) of a geared portion between the lens-side mount and the camera main body-side mount and the ratio (%) of the heat transferred for each of the mounting structure of an example which satisfies the conditions specified in the present invention and the mounting structure of comparative examples which does not satisfy the conditions specified in the present invention. Note that the ratio of the heat transferred is a value regarding the ratio of the heat transferred in Example A as 100.

**[Table 1]**

| | TOTAL SURFACE AREA (MM²) OF GEARED PORTION BETWEEN MOUNTS | CONTACT AREA EFFECTIVE FOR HEAT TRANSFER BETWEEN MOUNTS (MM²) | RATIO (%) OF CONTACT AREA EFFECTIVE FOR HEAT TRANSFER OF GEARED PORTION | RATIO OF HEAT TRANSFERRED |
|---|---|---|---|---|
| EXAMPLE A | 3019.1 | 1230 | 40.7 | 100 |
| COMPARATIVE EXAMPLE a | 2833.6 | 994 | 35.1 | 81 |
| COMPARATIVE EXAMPLE b | 714.0 | 507 | 29.0 | 41 |

Note that all mounts used for obtaining the data described in Table 1 are made of copper alloy (C3604) and of a bayonet type mount. As disclosed in table 1, the total surface area of the geared portion between the mounts was 3019.1 (mm²), the contact area effective for heat transfer between the mounts was 1230 (mm²), and the ratio of the contact area effective for heat transfer of the geared portion was 40.7(%) in Example A. Further, the heat transferred between the mounts in one second in Example A was regarded 100 as a reference as shown in Table 1. In contrast, the total surface area of the geared portion between the mounts was 2833.6 (mm²), the contact area effective for heat transfer between the mounts was 994 (mm²), and the ratio of the contact area effective for heat transfer of the geared portion was 35.1 (%) in Comparative Example a. Further, the relative ratio of the heat transferred between the mounts in one second was 81 in Comparative Example a when regarding the ratio of the heat transferred in Example A as 100. Next, the total surface area of the geared portion between the mounts was 714.0 (mm²), the contact area effective for heat transfer between the mounts was 507 (mm²), and the ratio of the contact area effective for heat transfer of the geared portion was 29.0(%) in Comparative Example b. Further, the relative ratio of the heat transferred between the mounts in one second was 41 in Comparative Example b when regarding the ratio of the heat transferred in Example A as 100.

From the results shown in Table 1, the largest heat transferred between the mounts was resulted in Example A which satisfies the condition specified in the present invention. From a practical point of view in the infrared camera, it should be noted that to make the temperature difference between a temperature of a space in which an image sensor is disposed and a temperature of a space in which an infrared transmitting lens is disposed small, the relative ratio of the heat transferred between the lens-side mount and the camera main body-side mount in one second can be 85 or more when regarding the ratio of the heat transferred in Example A as 100. Thus, in order to satisfy the condition specified, ratio of the contact area effective for heat transfer of the total surface area (geared area) of a geared portion between the lens-side mount and the camera main body-side mount in the mounting structure of infrared camera according to the present invention is preferably 36% or more.

Further, the mounting structure of infrared camera according to the present invention is preferable that any one of the lens-side mount and the camera main body-side mount comprises an elastic member which presses the other mount in the coupling direction in the state where the lens-side mount is geared to the camera main body-side mount.

In the mounting structure of infrared camera, it is preferable that when pressure of the elastic member is utilized to always maintain the contact state between the lens-side mount and the camera main body-side mount in this manner, heat transferred between the lens-side mount and the camera main body-side mount stably increase when compared to the conventional mounting structure. Further, even when the screw type mount described above is adopted to gear the mounts, such a structure makes contact of the screws tight, whereby the heat transferred between the lens-side mount and the camera main body-side mount can be prevented from decreasing.

Further, in the mounting structure of infrared camera according to the present invention, it is preferable that the elastic member is a metal plate spring and a spring reaction force of the metal plate spring is in the range from 4.9 N to 11.5 N.

FIG. 5 is a diagram illustrating a shape and an arrangement of the metal plate spring used in the mounting structure of infrared camera according to the present invention. As exemplified in FIG. 5, by arranging the metal plate spring 6 used in the mounting structure of infrared camera according to the present invention at a position of a bayonet groove 3a on a rear side of a camera-side mount 3, the bayonet hooks 2a of the lens-side mount 2 can be pressed to the bayonet groove 3a in a state being geared with the lens-side mount 2. Further, as exemplified in the figure 5, the metal plate spring 6 may have a cross sectional shape of a partially arc. As described above, the mounting structure of infrared camera according to the present invention can adopt the metal plate spring 6 as the elastic member. Here, when the spring reaction force of the metal plate spring 6 is less than 4.9 N, the contact state between both mounts 2 and 3 cannot be maintained to be always good. In addition, when the spring reaction force of the metal plate spring 6 exceeds 11.5 N, the mounts 2 and 3 cannot be smoothly geared to each other.

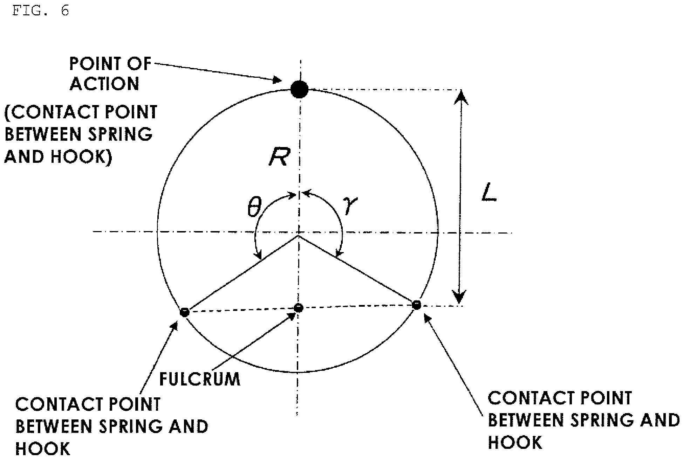

FIG. 6 is a diagram illustrating how to calculate a spring reaction force of the metal plate spring used in the mounting structure of infrared camera according to the present invention. FIG. 6 assumes a case in which the lens-side mount 2 of FIG. 2 is geared to the camera main body-side mount 3 of FIG. 3 and a total three of metal plate springs are arranged in respective positions corresponding to the bayonet hook 2a and the bayonet groove 3a. Note that in the mounting structure of infrared camera 1 according to the present invention, even if any mount type different from the bayonet type mount described above is adopted, it is preferable that at least three metal plate springs 6 are arranged at equal intervals in the peripheral direction of the mount in terms of the contact state between the mounts. As illustrated in FIG. 6, the spring reaction force of the metal plate spring 6 used in the mounting structure of infrared camera according to the present invention can be calculated by an expression of fmax = F multiplied by 1/L, where fmax denotes the maximum load (N) applied to one spring, F denotes the load (N) applied to a mount, L denotes the distance (mm) from the fulcrum to the point of action, and 1 denotes the distance (mm) from the center of gravity to the mounting surface. Note that F as the load (N) applied to a mount can be calculated by an expression of F = M multiplied by α, where M denotes the mass (kg) on the infrared camera main body-side and α denotes the withstand acceleration (m/s^2) specified in the Japanese standard. In FIG. 6, θ denotes an angle of the contact point of a metal plate spring and γ denote an angle of the contact point of another metal plate spring using the contact point as the point of action on the basis of the center of the mount.

In the mounting structure of infrared camera 1 according to the present invention, a minimum spring reaction force required for the metal plate spring 6 is calculated in the expressions described above. Then, a required spring reaction force required when the metal plate spring 6 is adopted in a C-mount security camera as one of the most popular compact security cameras installed in many stores, shops, and the like, will be calculated. In the c-mount security camera, the mass of the infrared camera main body-side is about 700g and the withstand acceleration specified in the Japanese standard is 3G. When such conditions for a general C-mount security camera are applied to the above expressions, the load applied to one metal plate spring 6 used in the mounting structure of infrared camera is 11.5 (N). Thus, in the mounting structure of infrared camera according to the present invention, the spring reaction force of the total metal plate springs 6 is preferably at least 11.5(N) from the point of view of the adhesion at the contact area between the lens-side mount 2 and the camera main body-side mount 3.

Further, in the mounting structure of infrared camera 1 according to the present invention, it is preferable that a stress loaded on the metal plate spring 6 in the process where the lens-side mount 2 is being geared to the camera main body-side mount 3 is 80% or less of a yield stress of the metal plate spring 6.

In the mounting structure of infrared camera 1 according to the present invention, when the stress loaded on the metal plate spring 6 is smaller than the yield stress of the metal plate spring 6, no plastic deformation occurs in the metal plate spring 6 and the elastic force can be maintained constant for a long term. Then, in the mounting structure of infrared camera 1 according to the present invention, it is required to determine the base material and the number of the metal plate springs 6 by considering the stress loaded on the metal plate spring 6 in the process where the lens-side mount 2 is being geared to the camera main body-side mount 3. Note that the metal plate spring 6 may be subjected to repeated load. In this case, the metal plate spring 6 may get fatigue fracture. Thus, in order to improve durability of the metal plate spring 6, it is preferable that the stress loaded on the metal plate spring 6 in the process where the lens-side mount 2 is being geared to the camera main body-side mount 3 is made 80% or less of the yield stress of the metal plate spring 6 from the point of view of the experience of the present inventors and the analysis in strength of materials. Note that regarding the yield stress of the metal plate spring 6, 0.2% off set yield strength which is the yield strength calculated according to a point where a strain is 0.2% can be applied to a material not having a definite yield point such as aluminum, for example.

Further, in the mounting structure of infrared camera according to the present invention, it is preferable that the lens-side mount 2 and the camera main body-side mount 3 are made of an aluminum alloy or a Corson alloy.

In the mounting structure of infrared camera 1 according to the present invention, regarding to the aluminum alloy, the lens-side mount 2 and the camera main body-side mount 3 are more preferable to be made of A6061 or A5056 specified in JIS H 4080 when the thermal conductivity is considered. Here, A5056 is an aluminum-magnesium alloy which is high level in strength and machinability and excellent in corrosion resistance. A6061 is an aluminum-magnesium-silicon alloy which is good in cold workability and corrosion resistance and can provide high level of strength by quenching/tempering treatment. The Corson alloy is a copper-nickel-silicon alloy excellent in strength. Further, an NC alloy (particularly NC50) which is a Corson alloy-based material for substituting a beryllium-copper alloy obtained by a well-balanced blend of nickel and silicon as major additional elements depending on the purpose and further adding chromium and tin may be more preferable because the NC alloy is excellent in thermal conductivity and corrosion resistance.

In the following Table 2, the heat transferred between the lens-side mount and the camera-side mount in one second of Comparative Example a in Table 1 is regarded as the reference 100 (%). Then, the improved ratios of heat transfer efficiency (%) among the respective mounts in Example A disclosed in Table 1; Example B having the same shape as Example A but only the material is replaced to the aluminum alloy; and Example C having the same shape as Example A but only the material is replaced to the Corson alloy.

**[Table 2]**

| | THERMAL CONDUCTIVITY (W/m-K) | IMPROVED RATIO OF HEAT TRANSFER EFFICIENCY |
|---|---|---|
| EXAMPLE A | 117 | 124% |
| EXAMPLE B | 180 | 191% |
| EXAMPLE C | 283.9 | 253% |
| COMPARATIVE EXAMPLE a | 117 | 100% |

From the results described in Table 2, the thermal conductivity in Comparative Example a and Example A in which the lens-side mounts 2 and the camera main body-side mounts 3 are made of a common copper alloy (C3604) was 117 (W/m-K). In contrast, the thermal conductivity in Example B using the lens-side mount 2 and the camera main body-side mount 3 made of an aluminum alloy (A6061 T651) was 180 (W/m-K). Further, the thermal conductivity of Example C using the lens-side mount 2 and the camera main body-side mount 3 made of a Corson alloy-based material (NC50) was 283.9 (W/m-K). From the results described above, it can be understood that the lens-side mount 2 and the camera main body-side mount 3 according to the present invention is preferable to be made of an aluminum alloy or a Corson alloy-based material from the point of view of heat transfer efficiency. When the heat transferred between the lens-side mount and the camera-side mount in one second in Comparative Example a is regarded 100(%) as the reference, the ratio of heat transfer efficiency in the examples with respect to Comparative Example a corresponding to a conventional product were 124% in Example A, 191% in Example B, and 253% in Example C, i.e. heat transfer efficiencies in all examples are greatly increased.

Note that in the mounting structure of infrared camera according to the present invention, in the state where the lens-side mount 2 and the camera main body-side mount 3 is made of an aluminum alloy, it is more preferable for improving imaging quality that the area exposed to infrared rays in the mount is colored in black (for example, by applying a black body paint) or is anodized to prevent irregular reflection.

The infrared camera according to the present invention: the infrared camera (not shown) according to the present invention is provided with the mounting structure of infrared camera 1 according to the present invention. Thus, because the mounting structure of the infrared camera 1 according to the present invention is provided, an infrared camera is excellent in optical quality. The infrared camera according to the present invention can further increase the heat transfer efficiency between components by applying thermally conductive grease between the components contacting the lens-side mount 2 and the camera main body-side mount 3.

Further, the infrared camera according to the present invention is provided with the mounting structure of infrared camera 1 comprising the lens-side mount 2 disposed in a lens unit in which an imaging lenses are disposed; and the camera main body-side mount 3 disposed in a camera main body and geared with the lens-side mount in an attachable and detachable manner. Furthermore, it is characterized in that the temperature difference between the lens-side mount and the camera main body-side mount is five degrees Celsius or less. Thus, the temperature difference between the lens-side mount and the camera main body-side mount is made five degrees Celsius or less to make the temperatures even, noise generated in the image sensor due to the temperature difference can be reduced.

Note that it is obvious in the electrical and electronic device disposed in the infrared camera as a heat generator, increasing performance of the devices year by year may tend to increase the heat generation. Thus, the infrared camera may face a further risk of a drawback associated with heat generated such as unstable operation and reduced processing speed in the future. However, the infrared camera according to the present invention can prevent occurrence of the problems due to heat generation by providing the mounting structure of infrared camera 1 according to the present invention.

As described above, the mounting structure of infrared camera according to the present invention can efficiently transfer the heat generated in the image sensor to the lens unit side without increasing the size of the infrared camera. Thus, the mounting structure of infrared camera according to the present invention and the infrared camera provided with the same can accurately perform object recognition in the dark and can be suitably used in vehicle-mounted far-infrared systems and security cameras.

## Claims

1. A mounting structure of infrared camera comprising:
a lens-side mount disposed in a lens unit in which an imaging lenses are disposed ; and a camera main body-side mount disposed in a camera main body and geared with the lens-side mount in an attachable and detachable manner, wherein
the geared portion between the lens-side mount and the camera main body-side mount has a contact area effective for heat transfer of 36% or more of the total surface area of the geared portion of the mounts.

2. The mounting structure of infrared camera according to claim 1, wherein any one of the lens-side mount and the camera main body-side mount comprises an elastic member which presses the other mount in the coupling direction in the state where the lens-side mount is geared to the camera main body-side mount.

3. The mounting structure of infrared camera according to claim 2, wherein the elastic member is a metal plate spring and a spring reaction force of the metal plate spring is in the range from 4.9 N to 11.5 N.

4. The mounting structure of infrared camera according to claim 3, wherein a stress loaded on the metal plate spring in the process where the lens-side mount is being geared to the camera main body-side mount is 80% or less of a yield stress of the metal plate spring.

5. The mounting structure of infrared camera according to claim 1 or claim 2, wherein the lens-side mount and the camera main body-side mount are made of an aluminum alloy or a Corson alloy.

6. An infrared camera comprising the mounting structure of infrared camera according to any of claims 1 to 5.

7. An infrared camera provided with a mounting structure of infrared camera comprising:
a lens-side mount disposed in a lens unit in which an imaging lenses are disposed ; and a camera main body-side mount disposed in a camera main body and geared with the lens-side mount in an attachable and detachable manner, wherein
a temperature difference between the lens-side mount and the camera main body-side mount is five degrees Celsius or less.
